# EUROPEAN PATENT APPLICATION

(11) **EP 4 711 185 A1**
(43) Date of publication of application: **18.03.2026**
(21) Application number: 25200065.8
(22) Date of filing: 04.09.2025
(51) Int. Cl.: B60L 15/20

(54) **ELECTRIC VEHICLE**

(30) Priority: 12.09.2024 JP 2024158003
(71) Applicant: TOYOTA JIDOSHA KABUSHIKI KAISHA, Toyota-shi, Aichi-ken 471-8571 (JP)
(72) Inventor: ISAMI, Yoichiro, TOYOTA-SHI, AICHI-KEN, 471-8571 (JP); IMAMURA, Tatsuya, TOYOTA-SHI, AICHI-KEN, 471-8571 (JP); MOTEKI, Taro, TOYOTA-SHI, AICHI-KEN, 471-8571 (JP); OKAMURA, Yukari, TOYOTA-SHI, AICHI-KEN, 471-8571 (JP); TOKUNAGA, Haruhisa, TOYOTA-SHI, AICHI-KEN, 471-8571 (JP); KATO, Shori, TOYOTA-SHI, AICHI-KEN, 471-8571 (JP)
(74) Representative: Cabinet Beau de Loménie

(57) **Abstract**

The present disclosure relates to an electric vehicle (100) having an electric motor (4F, 4R) as a driving source. The electric vehicle (100) comprises an accelerator operation device (22), a control device (101) that controls the electric motor (4F, 4R), and a torque operation device (24) configured to receive operation by a driver of the electric vehicle (100). The control device (101) acquires an operation amount of the torque operation device (24), and changes torque of the electric motor (4F, 4R) in accordance with the operation amount of the torque operation device (24).

## Description

### BACKGROUND

### Field

The present disclosure relates to an electric vehicle having an electric motor as a driving source.

### Background Art

Patent Literature 1 discloses an electric vehicle which comprises a motor as a power source for driving and can be controlled in a plurality of driving modes. The plurality of driving modes includes a manual gear shift mode and an electric driving mode. In the manual gear shift mode, driving torque of the motor is controlled in response to the driver's operation of a shift lever and a clutch pedal, thereby making it possible to realize operation feeling similar to that of a manual transmission vehicle. In the electric driving mode, the driving torque of the motor is controlled in response to the driver's operation of the accelerator pedal and the brake pedal, thereby providing operation feeling similar to that of an automatic transmission vehicle.

Patent Literature 1: JP2022-036823A

### SUMMARY

An electric vehicle equipped with an electric motor as a power source for driving is considered. Normally, in such an electric vehicle, the torque of the electric motor is controlled in response to the operation of an accelerator pedal by a driver, thereby allowing the driver to drive the electric vehicle. The present disclosure aims to further improve the operability of such an electric vehicle.

An object of the present disclosure is to provide a technique that can improve the operability of an electric vehicle that has an electric motor as a power source for driving.

The first aspect of the present disclosure relates to an electric vehicle having an electric motor as a driving source. The electric vehicle comprises an accelerator operation device, a control device that controls the electric motor, and a torque operation device configured to receive operation by a driver of the electric vehicle. The control device acquires an operation amount of the torque operation device, and changes torque of the electric motor in accordance with the operation amount of the torque operation device.

The electric vehicle according to the first aspect of the present disclosure comprises the torque operation device in addition to the accelerator operation device. The driver can control the torque of the electric motor not only by operating the accelerator operation device but also by operating the torque operation device. As a result, the driver can precisely adjust the torque of the electric motor as compared in a case where the driver drives the electric vehicle using only the accelerator operation device, and the operability of the electric vehicle for the driver can be improved.

The second aspect of the present disclosure relates to an electric vehicle having an electric motor as a driving source. The electric vehicle comprises an accelerator operation device, a dummy gear shift operation member, a dummy clutch operation member, and a control device for controlling the electric motor. The control device is configured to be able to switch a mode between a manual gear shift mode and an automatic mode. In the manual gear shift mode, a relationship between an operation amount of the accelerator operation device and torque of the electric motor is switched in accordance with operation of the dummy gear shift operation member and operation of the dummy clutch operation member. In the automatic mode, the torque of the electric motor is continuously changed based on the operation amount of the accelerator operation device without requiring operation of the dummy gear shift operation member. If the automatic mode is selected, the control device changes the torque of the electric motor in accordance with an operation amount of the dummy clutch operation member.

According to the electric vehicle of the second aspect described above, if the automatic mode is selected, the torque of the electric motor is changed in accordance with the operation amount of the dummy clutch operation member. The driver can control the torque of the electric motor by operating the dummy clutch operation member in addition to the accelerator operation device. As a result, the driver can precisely adjust the torque of the electric motor as compared in a case where the driver drives the electric vehicle using only the accelerator operation device, and the operability of the electric vehicle for the driver is improved. The dummy clutch operation member is an operation member that is used, in the manual gear shift mode, to switch the relationship between the operation amount of the accelerator operation device and the torque of the electric motor. By the relationship between the operation amount of the accelerator operation device and the torque of the electric motor being switched, gear shift operation of a manual transmission is simulated. By utilizing the operation member used for such virtual gear shift operation as an operation member for adjusting the torque of the electric motor together with the accelerator operation device in the automatic mode, the operation member can be utilized effectively, even when the electric vehicle has multiple modes.

Thus, according to the electric vehicle of the present disclosure, by providing an operation member for adjusting the torque of the electric motor in addition to the accelerator operation device, it becomes possible to precisely adjust the torque, thereby improving the operability of the electric vehicle.

### BRIEF DESCRIPTION OF THE DRAWINGS

FIG. 1 is a diagram showing a configuration of an electric vehicle according to an embodiment of the present disclosure.
FIG. 2 is a flowchart showing an example of a processing flow in a first embodiment.
FIG. 3 is a time chart for explaining a relationship between an operation amount of a torque operation device and motor torque in a first embodiment.
FIG. 4 is a flowchart showing an example of a processing flow in a second embodiment.
FIG. 5 is a diagram showing an example of a first motor torque map and a second motor torque map.
FIG. 6 is a time chart for explaining a relationship between an operation amount of a torque operation device and motor torque in a second embodiment.

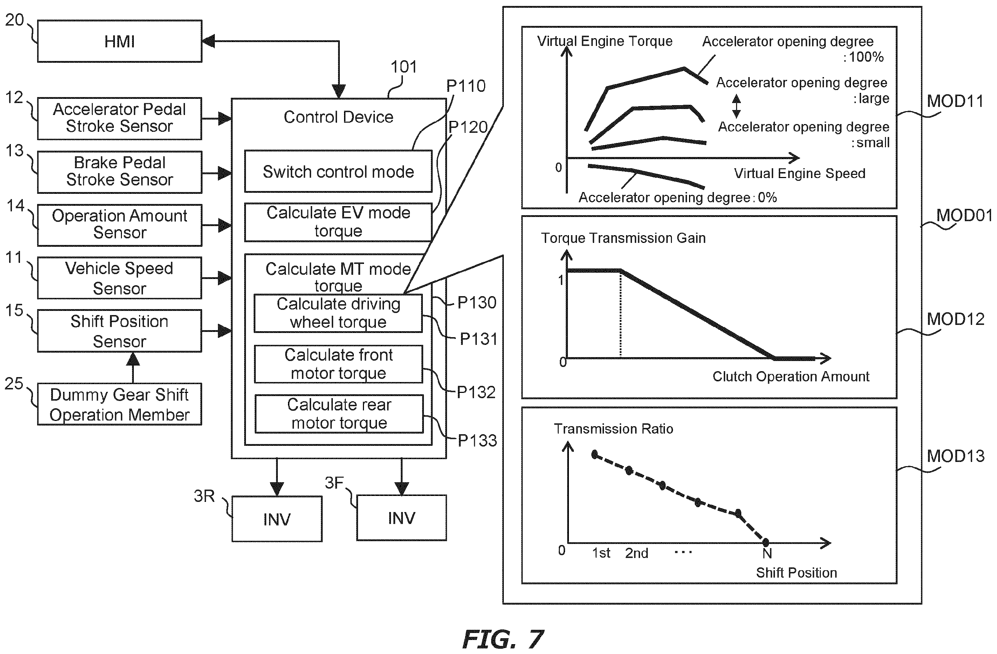

FIG. 7 is a diagram showing a configuration of a control device related to driving control of an electric vehicle equipped with an MT mode.

### DETAILED DESCRIPTION

Embodiments of the present disclosure will be described with reference to accompanying drawings.

### 1. Configuration of Power System of Electric Vehicle

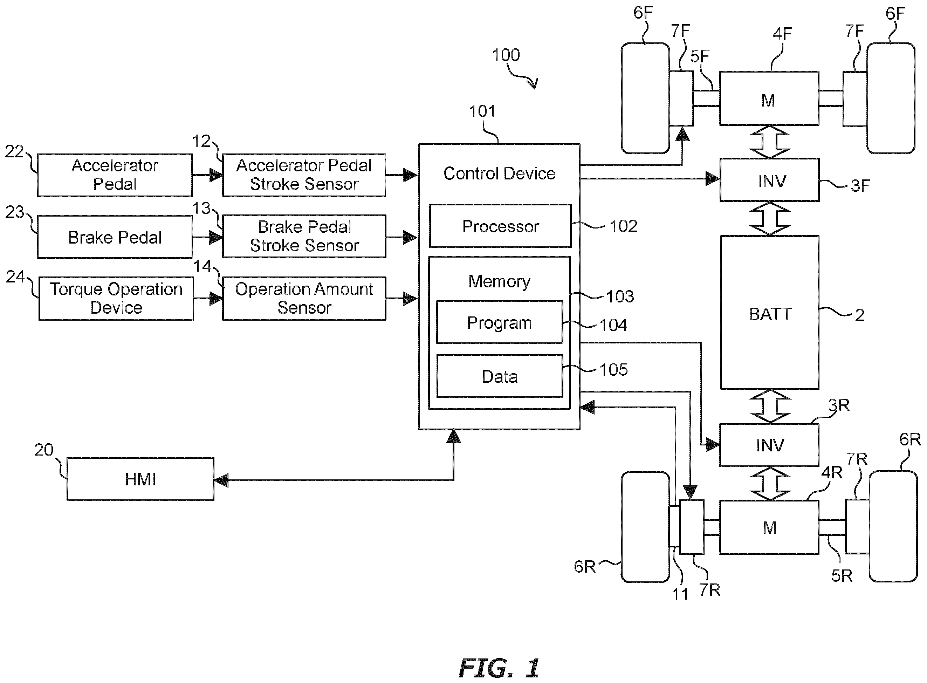

FIG. 1 is a schematic diagram showing a configuration of an electric vehicle 100 according to an embodiment of the present disclosure. First, a configuration of a power system of the electric vehicle 100 is described with reference to FIG. 1.

The electric vehicle 100 is equipped with two electric motors (M) 4F and 4R at the front and the rear as power sources for driving the vehicle. The electric motors 4F and 4R are, for example, three-phase AC motors. The front electric motor 4F is connected to a front drive shaft 5F, which drives front wheels 6F. The rear electric motor 4R is connected to a rear drive shaft 5R, which drives rear wheels 6R. The front wheels 6F are suspended by front suspension 7F, in which the right and the left can be controlled independently and electronically. The rear wheels 6R are suspended by rear suspension 7R, in which the right and the left can be controlled independently and electronically.

The front electric motor 4F and the rear electric motor 4R are equipped with a front inverter 3F and a rear inverter 3R, respectively. Each of the inverters (INV) 3F and 3R is connected to a battery (BATT) 2. The battery 2 stores electric energy for driving the electric motors 4F and 4R. In other words, the electric vehicle 100 is a battery electric vehicle (BEV), which is driven by the electric energy stored in the battery 2. The inverters 3F and 3R are, for example, voltage type inverters and control the torque of the electric motors 4F and 4R by PWM control.

### 2. Configuration of Control System of Electric Vehicle

A configuration of a control system of the electric vehicle 100 will be described with reference to FIG. 1.

The electric vehicle 100 is equipped with a vehicle speed sensor 11. At least one of wheel speed sensors (not shown in the figures) installed on each of the left and right front wheels 6F and the left and right rear wheels 6R is used as the vehicle speed sensor 11.

The electric vehicle 100 is equipped with an accelerator pedal stroke sensor 12. The accelerator pedal stroke sensor 12 is installed on an accelerator pedal 22 and outputs a signal indicating an amount of depression of the accelerator pedal 22 (accelerator pedal stroke), that is, an accelerator opening degree. Although the accelerator pedal 22 is a pedal-type device operated by the driver's foot, the device for operating the accelerator may be a device operated by the driver's hand. For example, the electric vehicle 100 may be equipped with a lever-type accelerator operation device or a dial-type accelerator operation device that is operated by the driver's hand instead of the accelerator pedal 22. A sensor is also installed on such accelerator operation device and output a signal indicating the operation amount, that is, the accelerator opening degree.

The electric vehicle 100 is equipped with a brake pedal stroke sensor 13. The brake pedal stroke sensor 13 is installed on a brake pedal 23 and outputs a signal indicating an amount of depression of the brake pedal 23, that is, the brake opening degree.

The accelerator pedal 22 and the brake pedal 23 are driving operation members used to drive the electric vehicle 100. A driver of the electric vehicle 100 can basically drive the electric vehicle 100 by only operating the accelerator pedal 22, the brake pedal 23, and a steering wheel (not shown in the figures). In addition to these driving operation members, the electric vehicle 100 is equipped with a torque operation device 24.

The torque operation device 24 is a device for controlling the torque of the electric motors 4F and 4R. If the electric vehicle 100 is an electric vehicle equipped with an MT mode (described later), the torque operation device 24 may be a dummy clutch pedal having a structure similar to a clutch pedal installed in a manual transmission vehicle (MT vehicle). The dummy clutch pedal is equipped with, for example, a reaction force mechanism that generates a reaction force against the depression by the driver. A position where no pedal force is applied is a start position of the dummy clutch pedal, and a position where the pedal is fully depressed is an end position of the dummy clutch pedal. The driver can operate the dummy clutch pedal from the start position to the end position against the reaction force by the reaction mechanism. However, the torque operation device 24 is not limited to such a pedal-type operation device. For example, the torque operation device 24 may be a lever-type operation device or a dial-type operation device that is operated by the driver's hand.

The torque operation device 24 is equipped with an operation amount sensor 14 which outputs a signal indicating the opening degree, that is, the operation amount of the torque operation device 24. A relationship between the operation amount of the torque operation device 24 and the torque of the electric motors 4F and 4R is described in detail in the next chapter.

The electric vehicle 100 is equipped with a human-machine interface (HMI) 20 as an interface with the driver. The HMI 20 is equipped with a touch panel display. The HMI 20 displays information on the touch panel display and receives input from the driver through touch operation on the touch panel display. The HMI 20 may include an in-vehicle speaker that provides audible information to the driver.

The electric vehicle 100 is equipped with a control device 101. Sensors and devices to be controlled mounted on the electric vehicle 100 are connected to the control device 101 via an in-vehicle network. In addition to the vehicle speed sensor 11, the accelerator pedal stroke sensor 12, the brake pedal stroke sensor 13, and the operation amount sensor 14, various sensors are mounted on the electric vehicle 100.

The control device 101 includes at least a processor (processing circuit) 102 and a memory 103. The memory 103 includes a RAM for temporarily storing data, and a ROM for storing a program 104 which can be executed by the processor 102 and various data 105 related to the program. The program 104 is composed of a plurality of instructions. The processor 102 reads the program 104 and the data 105 from the memory 103, executes them, and generates a control signal based on signals acquired from respective sensors. The number of the processors 102 and the memories 103 included in the control device 101 may be one or more.

The control device 101 controls the electric vehicle 100. Control of the electric vehicle 100 performed by the control device 101 includes driving control. In the driving control, the control device 101 acquires the vehicle speed from the signal of the vehicle speed sensor 11 and acquires the accelerator opening degree from the signal of the accelerator pedal stroke sensor 12. The control device 101 has a motor torque map with the accelerator opening degree and the vehicle speed as parameters. Basically, in the driving control, the control device 101 inputs the vehicle speed and the accelerator opening degree to the motor torque map and controls the inverters 3F and 3R so as to cause the electric motors 4F and 4R generate the torque acquired from the motor torque map.

Furthermore, when the torque operation device 24 is operated by the driver, the control device 101 changes the torque of the electric motors 4F and 4R in response to the signal from the operation amount sensor 14. More specifically, the control device 101 changes the relationship between the accelerator opening degree and the motor torque depending on whether the operation amount of the torque operation device 24 is equal to or smaller than a predetermined amount or larger than the predetermined amount. Two embodiments of the relationship between the operation of the torque operation device 24 and the torque of the electric motors 4F and 4R is described below.

### 3. First embodiment

### 3-1. Processing flow

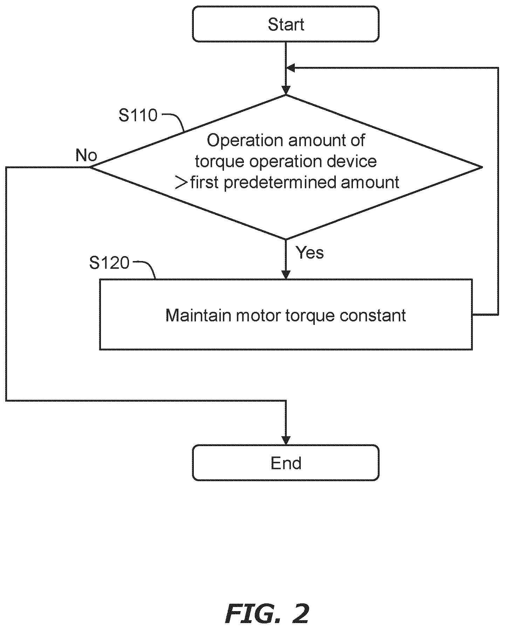

FIG. 2 is a flowchart showing an example of a processing flow relating to the determination of the motor torque depending on the operation amount of the torque operation device 24 in the first embodiment. The processing in FIG. 2 is repeatedly executed by the control device 101 (processor 102) at a predetermined control cycle.

In Step S110, the control device 101 determines whether the operation amount of the torque operation device 24 is larger than a first predetermined amount. If the operation amount that the torque operation device 24 receives is larger than the first predetermined amount (Step S110; Yes), the processing proceeds to Step S120. On the other hand, if the operation amount that the torque operation device 24 receives is equal to or smaller than the first predetermined amount (Step S110; No), the processing ends.

In Step S120, the control device 101 maintains the motor torque of the electric motors 4F and 4R constant. In other words, the control device 101 controls the inverters 3F and 3R so as to maintain the motor torque at the time when the operation amount of the torque operation device 24 becomes larger than the predetermined amount, regardless of the change in the accelerator opening degree.

After the motor torque is maintained, the determination of Step S110 is performed again. If the state in which the operation amount of the torque operation device 24 is larger than the first predetermined amount continues, the processing proceeds again to Step S120, and the motor torque at the time when the operation amount of the torque operation device 24 becomes larger than the first predetermined amount continues to be output. If the operation amount of the torque operation device 24 is equal to or less than the first predetermined amount, the processing ends. Thereafter, normal motor torque, that is, motor torque based on the vehicle speed and the accelerator opening degree is output.

In the first embodiment, as described above, while the operation amount of the torque operation device 24 is larger than the predetermined amount, the motor torque is maintained constant and a change in the accelerator opening degree is not reflected. For example, the driver who wants to drive the electric vehicle 100 at a constant speed may want to maintain the motor torque constant. In such a case, to maintain constant torque, it is easier for the driver to operate the torque operation device 24 so that the operation amount is larger than the first operation amount, rather than finely adjusting the depression amount of the accelerator pedal 22. Therefore, when the operation amount of the torque operation device 24 is larger than the predetermined amount, the motor torque is maintained constant, thereby improving the operability of the electric vehicle 100.

### 3-2. Time Chart

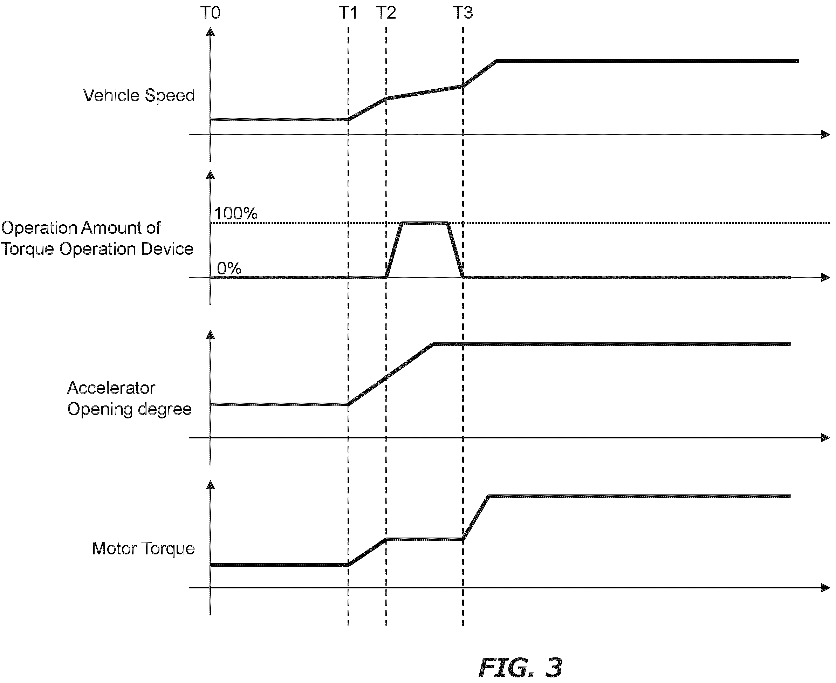

FIG. 3 is a time chart for explaining the relationship between the operation amount of the torque operation device 24 and the motor torque in the first embodiment. Here, it is assumed that the first predetermined amount is set to 0%, and although not shown in the figure, it is assumed that the shift range is in the drive range from the start to the end of the time chart.

At Time T0, when the time chart starts, the driver does not operate the torque operation device 24. The control device 101 calculates the torque based on the vehicle speed and the accelerator opening degree and controls the inverters 3F and 3R so that the electric motors 4F and 4R generate the calculated torque. In the time chart, the vehicle speed and the accelerator opening degree are kept constant, so the motor torque is also kept constant.

At Time T1, the driver further depresses the accelerator pedal 22, and the accelerator opening degree increases. As the accelerator opening degree increases, the motor torque calculated based on the torque map also increases, and the vehicle speed begins to increase.

At Time T2, the driver operates the torque operation device 24. In response to the fact that the torque operation device 24 is operated and the operation amount becomes larger than zero, the control device 101 memorizes the motor torque at the time when the operation amount becomes larger than zero. In other words, the motor torque at Time T2 is memorized.

From Time T2 to Time T3, the driver continues to operate the torque operation device 24. While the torque operation device 24 receives the operation amount, the control device 101 keeps the torque output from the electric motors 4F and 4R constant regardless of the accelerator opening degree. From Time T2 to Time T3, the driver further depresses the accelerator pedal 22, and the accelerator opening degree increases. However, the control device 101 controls the inverters 3F and 3R so that the motor torque memorized at Time T2 continues to be output from the electric motors 4F and 4R.

At Time T3, the driver ends operation of the torque operation device 24. After Time T3, the torque operation device 24 does not receive the operation amount. Since the operation amount of the torque operation device 24 becomes smaller than or equal to 0%, the control device 101 calculates the torque based on the vehicle speed and the accelerator opening degree as usual and controls the inverters 3F and 3R so that the calculated torque is output from the electric motors 4F and 4R. In addition, the control device 101 may perform a filtering process to smoothen the change in torque so that the motor torque output at Time T3 does not change suddenly.

### 4. Second Embodiment

### 4-1. Processing Flow

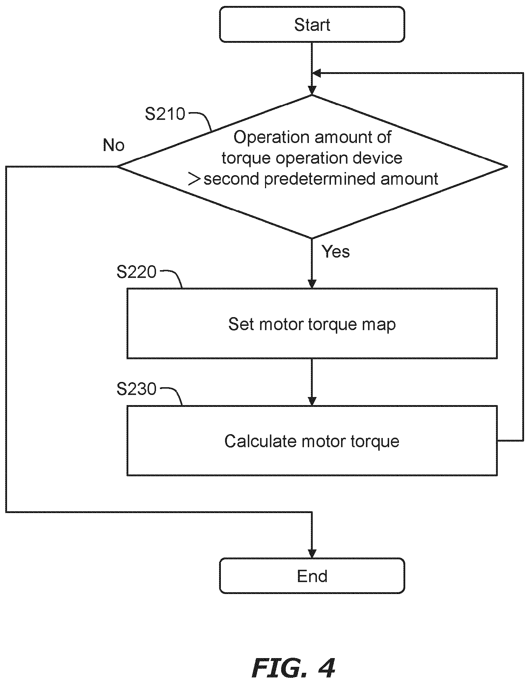

FIG. 4 is a flowchart showing an example of a processing flow relating to the determination of the motor torque depending on the operation amount of the torque operation device 24 in the second embodiment. The processing of FIG. 4 is repeatedly executed by the control device 101 (processor 102) at a predetermined control cycle.

In Step S210, the control device 101 determines whether the operation amount of the torque operation device 24 is larger than a second predetermined amount. The second predetermined amount used in the determination here may be the same as the first predetermined amount in the first embodiment or may be different from that. If the operation amount that the torque operation device 24 receives is larger than the second predetermined amount (Step S210; Yes), the processing proceeds to Step S220. On the other hand, if the operation amount that the torque operation device 24 receives is equal to or smaller than the second predetermined amount (Step S210; No), the processing ends.

In the second embodiment, a motor torque map is prepared for a case where the operation amount of the torque operation device 24 exceeds the second predetermined amount. Hereinafter, this motor torque map is referred to as a second motor torque map. Further, in comparison with the second motor torque map, a normal motor torque map, in which the operation amount of the torque operation device 24 is not taken into consideration, is referred to as a first motor torque map. The second motor torque map is prepared in advance and stored in the memory 103 as the data 105.

In Step S220, the control device 101 sets the motor torque map used for calculating the motor torque to the second motor torque map.

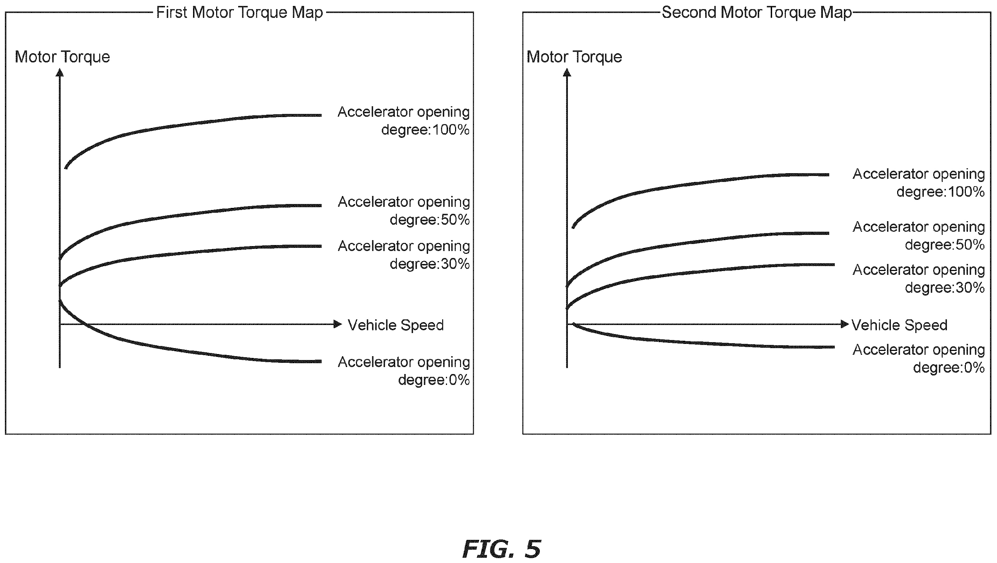

FIG. 5 shows an example of the first motor torque map and the second motor torque map. The left is the first motor torque map, and the right is the second motor torque map. In each motor torque map, the horizontal axis corresponds to the vehicle speed, the vertical axis corresponds to the motor torque, and the relationship between the vehicle speed and the motor torque is defined for each accelerator opening degree. In the second motor torque map, the motor torque for each accelerator opening degree is defined so that an absolute value of the motor torque is smaller than that of the motor torque in the first motor torque map.

Reference is made again to FIG. 4. After the motor torque map is set to the second motor torque map, the processing proceeds to Step S230. In Step S230, the control device 101 calculates the motor torque in accordance with the second motor torque map, which is set in Step S220. The motor torque calculated in accordance with the second motor torque map is torque the absolute value of which is smaller than that of the torque calculated in accordance with the first motor torque map.

After the motor torque is calculated, the determination in Step S210 is performed again. If the operation amount of the torque operation device 24 is kept larger than the second predetermined amount, the processing again proceeds to Steps S220 and S230, in which the motor torque is calculated in accordance with the second motor torque map. If the operation amount of the torque operation device 24 is equal to or less than the second predetermined amount, the processing ends. Thereafter, the normal motor torque based on the vehicle speed and the accelerator opening degree is calculated in accordance with the first motor torque map.

In this way, in the second embodiment, if the operation amount of the torque operation device 24 becomes larger than the second predetermined amount, the motor torque is calculated using the second motor torque map, which is different from the first motor torque map and is normally used. In the second motor torque map, the motor torque for each accelerator opening degree is defined so that the absolute value of the motor torque is smaller than that of the motor torque defined by the first motor torque map. Therefore, the absolute value of the output motor torque is made smaller than when the operation amount of the torque operation device 24 is equal to or smaller than the second predetermined amount.

By using a different motor torque map when the operation amount of the torque operation device 24 is larger than the second predetermined amount, it becomes easier for the driver to finely tune the motor torque than when the motor torque is controlled only by the accelerator pedal 22. In this way, the operability of the electric vehicle 100 can be improved.

As another example, the output motor torque may be set to zero when the operation amount of the torque operation device 24 becomes equal to or larger than a predetermined amount. The predetermined amount in this case may be the same as the second predetermined amount or may be larger than the second predetermined amount. For example, the second predetermined amount may be set to 0%, and when the operation amount of the torque operation device 24 becomes larger than 0%, the motor torque calculated in accordance with the second motor torque map may be output, and when the operation amount of the torque operation device 24 is further increased and reaches 100%, the output motor torque may be set to 0.

### 4-2. Time Chart

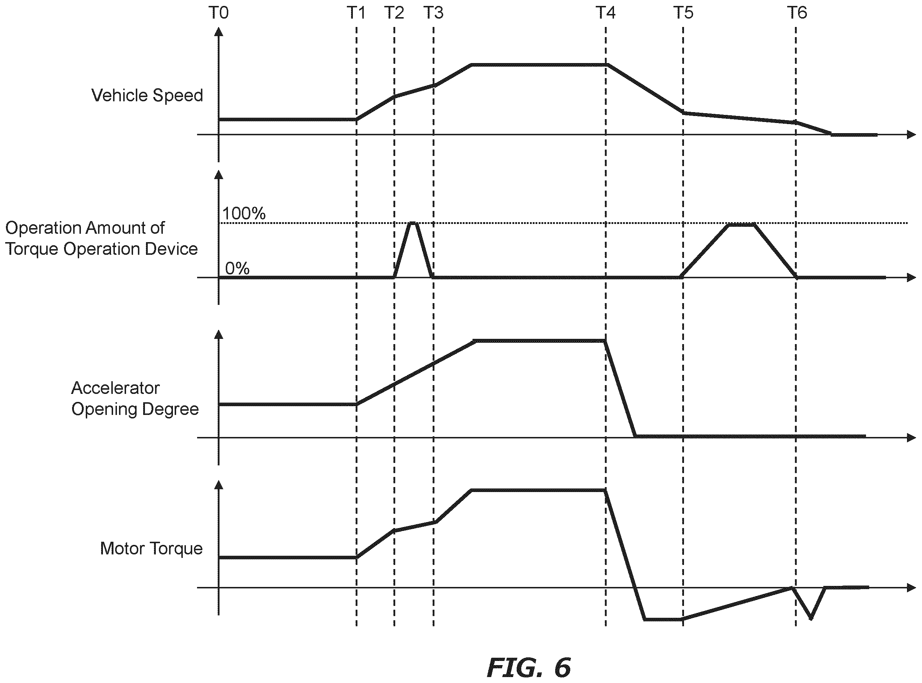

FIG. 6 is a time chart for explaining the relationship between the operation amount of the torque operation device 24 and the motor torque in the second embodiment. Here, it is assumed that the second predetermined amount is set to 0%. Although not shown in the figure, it is assumed that the shift range is in the drive range from the start to the end of the time chart.

At Time T0, when the time chart starts, the driver does not operate the torque operation device 24. The control device 101 calculates the motor torque based on the vehicle speed and the accelerator opening degree in accordance with the first motor torque map and controls the inverters 3F and 3R so that the electric motors 4F and 4R generate the calculated torque. Here, the vehicle speed and the accelerator opening degree are kept constant, so the motor torque is constant.

At Time T1, the driver further depresses the accelerator pedal 22, and the accelerator opening degree increases. At this point in time, since the torque operation device 24 is not operated, the control device 101 calculates the motor torque in accordance with the first motor torque map. As the accelerator opening degree increases, the calculated torque increases.

From Time T2 to Time T3, the driver operates the torque operation device 24. Since the operation amount is larger than 0%, the control device 101 calculates the motor torque in accordance with the second motor torque map. As the accelerator opening degree increases, the motor torque calculated from the second motor torque map also increases. However, the absolute value of the motor torque is smaller than that of the motor torque calculated from the first motor torque map.

After the driver ends operation of the torque operation device 24 at Time T3, the motor torque is calculated again using the first motor torque map. At Time T2 and Time T3, the control device 101 may perform the filtering process to prevent a sudden change in the motor torque.

At Time T4, the driver loosens the accelerator pedal 22, and the accelerator opening degree decreases. As the accelerator opening degree decreases, the torque calculated from the first motor torque map also decreases and eventually becomes a negative value. Along with this, the vehicle speed gradually decreases.

At Time T5, the driver operates the torque control device 24 again. In response to the fact that the operation amount that the torque operation device 24 receives becomes larger than 0%, the control device 101 switches the motor torque map to the second motor torque map. The absolute value of the calculated torque becomes smaller than that of the torque calculated from the first motor torque map. Since the absolute value of the torque is reduced, the deceleration becomes smaller than when the torque operation device 24 is not operated.

At Time T6, the driver ends operation of the torque operation device 24. The control device 101 again calculates the motor torque by using the first motor torque map. The absolute value of the calculated torque becomes larger than that of the torque calculated from the second motor torque map. Since the output torque is a negative value, the vehicle eventually comes to a halt and the motor torque becomes zero.

### 5. Examples of Use

The electric vehicle 100 may be a vehicle that has an "MT mode", in which driving of the MT vehicle is simulated. Through the HMI 20, the driver can switch the control mode between an EV mode, in which the electric vehicle 100 is driven as a normal BEV, and the MT mode. Alternatively, the control mode may be switched automatically. For example, when the remaining charge of the battery 2 becomes low, when the battery 2 becomes too hot, or when abnormality is detected in the powertrain of the electric vehicle 100, the control mode may be automatically switched to the EV mode.

In the MT mode, the driver performs virtual gear shift operation using the dummy gear shift operation member 25 and the torque operation device 24.

The dummy gear shift operation member 25 is, for example, a dummy H-type shifter that simulates an H-type shifter. The dummy H-type shifter has a structure similar to a shift stick installed on a console and can be moved along an H-shaped gate among shift positions. However, since the electric vehicle 100 does not have an actual transmission, the shift positions of the dummy H-type shifter are virtual shift positions. The dummy gear shift operation member 25 is equipped with a shift position sensor 15. The shift position sensor 15 outputs a signal indicating the shift position selected by the dummy gear shift operation member 25.

In the MT mode, the torque operation device 24 is used as an operation member for simulating clutch operation. The torque operation device 24 used in the MT mode is used as a device that simulates the clutch operation, and may therefore be called a dummy clutch operation member. In the MT mode, the operation amount of the torque operation device 24 acquired by the operation amount sensor 14 is processed by the control device 101 as the operation amount of the dummy clutch operation device, that is, the clutch opening degree. However, since the electric vehicle 100 does not have an actual clutch, the operation amount of the dummy clutch operation device is a virtual clutch opening degree.

FIG. 5 is a diagram showing an example of a configuration of the control device 101 for controlling driving of such an electric vehicle 100. By the processor 102 executing one or more driving control programs 104 stored in the memory 103, the processor 102 functions as a driving control device.

To the control device 101 acting as the driving control device, a control mode signal is input from the HMI 20. The control mode signal includes information regarding the control mode selected by the driver. The control device 101 executes Process P110 based on the control mode signal. In Process P110, the control mode is switched in accordance with the control mode signal.

If the control mode is switched to the EV mode, the control device 101 executes Process P120 for calculating the torque in the EV mode. The method of calculating the motor torque in Process P120 is as described above. The control device 101 inputs the vehicle speed and the accelerator opening degree to the motor torque map and controls the inverters 3F and 3R so that the electric motors 4F and 4R generate the torque obtained from the motor torque map. That is, in the EV mode, the driver is not required to operate the dummy gear shift operation member 25, and the motor torque is changed continuously based on the accelerator opening degree. At this time, the control device 101 changes the motor torque in accordance with the operation amount of the torque operation device 24.

If the control mode is switched to the MT mode, the control device 101 executes Process P130 for calculating the torque in the MT mode. Process P130 includes Process P131 for calculating the torque to be generated at the driving wheels. Further, Process P130 includes Process P132 and Process P133. Process P132 is a process for calculating torque to be generated by the front electric motor 4F, and Process P133 is a process for calculating torque to be generated by the rear electric motor 4R. Processes P132 and P133 are executed based on the driving wheel torque calculated in Process P130 and the torque distribution between the front wheels 6F and the rear wheels 6R.

A vehicle model MOD01 is used for calculating the driving wheel torque in Process P131. The vehicle model MOD01 includes an engine model MOD11, a clutch model MOD12, and a transmission model MOD13. An engine, a clutch, and a transmission virtually realized by the vehicle model MOD01 are referred to as a virtual engine, a virtual clutch, and a virtual transmission, respectively. In the engine model MOD11, the virtual engine is modeled. In the clutch model MOD12, the virtual clutch is modeled. In the transmission model MOD13, the virtual transmission is modeled.

The engine model MOD11 calculates a virtual engine speed and virtual engine torque. The virtual engine speed is calculated from the vehicle speed, an overall reduction ratio, and a slip rate of the virtual clutch. The virtual engine torque is calculated from the virtual engine speed and the accelerator opening degree. The vehicle speed is acquired from the signal of the vehicle speed sensor 11. The accelerator opening degree is acquired from the signal of the accelerator pedal stroke sensor 12. The overall reduction ratio is a value obtained by multiplying a transmission ratio of the virtual transmission by a reduction ratio determined by a mechanical structure from the virtual transmission to the driving wheels. In the engine model MOD11, a relationship between the virtual engine speed and the virtual engine torque is defined for each accelerator opening degree. Engine characteristics of the engine model MOD11 may be selectable by the driver by operating the HMI 20.

The clutch model MOD12 calculates a torque transmission gain. The torque transmission gain is a gain for calculating a degree of torque transmission of the virtual clutch in accordance with the clutch opening degree. The clutch opening degree is acquired from the signal of the operation amount sensor 14. If the torque operation device 24 is the dummy clutch pedal that simulates the clutch pedal, the clutch opening degree is 0% at the start position of the dummy clutch pedal and 100% at the end position of the dummy clutch pedal. In the clutch model MOD12, the torque transmission gain is given in accordance with the clutch opening degree. The torque transmission gain is converted into a clutch torque capacity of the virtual clutch, that is, a virtual clutch torque capacity. Then, based on a comparison between the virtual clutch torque capacity and the virtual engine torque calculated by the engine model MOD11, virtual clutch torque input from the virtual clutch to the virtual transmission is calculated. In addition, in the clutch model MOD12, a value obtained by subtracting a torque transmission gain from 1 is calculated as the slip ratio. The slip ratio is used to calculate the virtual engine speed in the engine model MOD11.

The transmission model MOD13 calculates virtual transmission torque using the virtual transmission ratio and the virtual clutch torque. The virtual transmission torque is virtual torque output from the virtual transmission. The control device 101 controls the inverters 3F and 3R so that the output torque of the electric motors 4F and 4R changes in accordance with the virtual transmission torque. The virtual transmission torque changes discontinuously in response to switching the virtual transmission ratio. This discontinuous change in the virtual transmission torque generates a torque shock in the electric vehicle 100, creating impression that the vehicle is equipped with a stepped transmission.

The vehicle model MOD01 calculates the driving wheel torque based on the virtual transmission torque and the reduction ratio. The driving wheel torque is a total amount of the torque given to the left and right front wheels 6F and the left and right rear wheels 6R. Torque distribution to the front wheels 6F and the rear wheels 6R may be fixed or may be actively or passively varied. The torque distribution may be selectable by the driver, and when a mode in which only the rear wheels are driven is selected, the driving wheel torque becomes a total amount of the torque given to the left and right rear wheels 6R.

In Process P132, the torque of the front electric motor 4F in the MT mode (front motor torque) is calculated by multiplying the driving wheel torque calculated in Process P131 by the torque distribution rate to the front wheels 6F and the reduction ratio from the output shaft of the front electric motor 4F to the front wheels 6F. The control device 101 controls the front inverter 3F so as to cause the front electric motor 4F to generate the front motor torque calculated in Process P132.

In Process P133, the torque of the rear electric motor 4R in the MT mode (rear motor torque) is calculated by multiplying the driving wheel torque calculated in Process P131 by the torque distribution rate to the rear wheels 6R and the reduction ratio from the output shaft of the rear electric motor 4R to the rear wheels 6R. The control device 101 controls the rear inverter 3R so as to cause the rear electric motor 4R to generate the rear motor torque calculated in Process P133.

In this way, in the MT mode, the relationship between the accelerator opening degree and the motor torque is switched in response to the operation of the dummy gear shift operation member 25 and the dummy clutch operation device, thereby reproducing the virtual gear shift operation. Since the MT mode requires the gear shift operation by the driver, it may also be called a manual gear shift mode. In contrast to the manual gear shift mode, the EV mode may be called an automatic mode.

The dummy clutch operation device is used as a device for the driver to input the clutch opening degree in the MT mode and is used as the torque operation device 24 described above for controlling the torque in the EV mode. By using the same device properly depending on the control mode, the operability of the electric vehicle 100 is improved, and the device mounted on the vehicle can be used in a variety of situations, making it possible to utilize the device effectively.

## Claims

1. An electric vehicle (100) having an electric motor (4F, 4R) as a driving source, comprising:
an accelerator operation device (22);
a control device (101) for controlling the electric motor (4F, 4R); and
a torque operation device (24) configured to receive an operation by a driver of the electric vehicle (100), wherein
the control device (101) is configured to:
acquire an operation amount of the torque operation device (24) by the driver; and
change torque of the electric motor (4F, 4R) in accordance with the operation amount of the torque operation device (24).

2. The electric vehicle (100) according to claim 1, wherein
the control device (101) is further configured to change a relationship between the operation amount of the accelerator operation device (22) and the torque of the electric motor (4F, 4R) depending on whether the operation amount of the torque operation device (24) is equal to or smaller than a predetermined amount or larger than the predetermined amount.

3. The electric vehicle (100) according to claim 2, wherein
the control device (101) is configured to:
when the operation amount of the torque operation device (24) is equal to or less than the predetermined amount, determine the torque of the electric motor (4F, 4R) based on a vehicle speed of the electric vehicle (100) and the operation amount of the accelerator operation device (22); and
while the operation amount of the torque operation device (24) is larger than the predetermined amount, maintain the torque of the electric motor (4F, 4R) constant.

4. The electric vehicle (100) according to claim 2, wherein
the control device (101) comprises a storage device for storing a first motor torque map and a second motor torque map, the control device (101) being configured to use the first motor torque map when the operation amount of the torque operation device (24) is equal to or smaller than the predetermined amount, and the second motor torque map when the operation amount of the torque operation device (24) is larger than the predetermined amount, and
an absolute value of torque defined by the second motor torque map is smaller than an absolute value of torque defined by the first motor torque map.

5. The electric vehicle (100) according to claim 1, further comprising a dummy gear shift operation member (25), wherein
the torque operation device (24) is configured as a dummy clutch operation member, and
the control device (101) is further configured to:
be able to switch a manual gear shift mode and an automatic mode, the manual gear shift mode being a mode in which a relationship between an operation amount of the accelerator operation device (22) and the torque of the electric motor (4F, 4R) is switched in response to operation of the dummy gear shift operation member (25) and the dummy clutch operation member (24), the automatic mode being a mode in which the torque of the electric motor (4F, 4R) is continuously changed based on the operation amount of the accelerator operation device (22) without requiring operation of the dummy gear shift operation member (25); and
when the automatic mode is selected, change the torque of the electric motor (4F, 4R) in accordance with the operation amount of the dummy gear shift operation member (24).

6. The electric vehicle (100) according to claim 5, wherein
the control device (101) is further configured to, when the automatic mode is selected, change the relationship between the operation amount of the accelerator operation device (22) and the torque of the electric motor (4F, 4R) depending on whether the operation amount of the dummy clutch operation member (24) is equal to or smaller than a predetermined amount or larger than the predetermined amount.

7. The electric vehicle (100) according to claim 6, wherein
the control device (101) is configured to:
if the automatic mode is selected,
when the operation amount of the dummy clutch operation member (24) is equal to or smaller than the predetermined amount, determine the torque of the electric motor (4F, 4R) based on a vehicle speed of the electric vehicle (100) and the operation amount of the accelerator operation device (22); and
while the operation amount of the dummy clutch operation member (24) is larger than the predetermined amount, maintain the torque of the electric motor (4F, 4R) constant.

8. The electric vehicle (100) according to claim 6, wherein
the control device (101) is configured to:
if the automatic mode is selected,
when the operation amount of the dummy clutch operation member (24) is equal to or smaller than the predetermined amount, calculate the torque of the electric motor (4F, 4R) based on a first motor torque map; and
when the operation amount of the dummy clutch operation member (24) is larger than the predetermined amount, calculate the torque of the electric motor (4F, 4R) based on a second motor torque map, and
an absolute value of torque defined by the second motor torque map is smaller than an absolute value of torque defined by the first motor torque map.
